(19)

Europäisches
Patentamt

European
Patent Office

Office européen
des brevets

(11) **EP 2 517 458 B1**

(12) **EUROPEAN PATENT SPECIFICATION**

(45) Date of publication and mention
of the grant of the patent:
**09.03.2016 Bulletin 2016/10**

(51) Int Cl.:
***H04N 5/235*** (2006.01)

(21) Application number: **10839841.3**

(86) International application number:
**PCT/NO2010/000448**

(22) Date of filing: **07.12.2010**

(87) International publication number:
**WO 2011/078682 (30.06.2011 Gazette 2011/26)**

(54) **METHOD FOR REMOVING FLICKERING**

VERFAHREN ZUR BESEITIGUNG VON FLIMMEREFFEKTEN

PROCÉDÉ PERMETTANT DE SUPPRIMER LE SCINTILLEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2009 NO 20093588**

(43) Date of publication of application:
**31.10.2012 Bulletin 2012/44**

(73) Proprietor: **Cisco Systems International Sarl
1180 Rolle (CH)**

(72) Inventor: **SCHATVET, Petter
N-1338 Sandvika (NO)**

(74) Representative: **Kazi, Ilya et al
Mathys & Squire LLP
The Shard
32 London Bridge Street
London SE1 9SG (GB)**

(56) References cited:
**EP-A2- 0 771 106      DK-U4- 9 600 320
GB-A- 2 284 318      US-B1- 6 295 085
US-B1- 6 421 097**

EP 2 517 458 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of invention

The present invention discloses a method and a video conference terminal or video recording unit adapted to remove flickering in video pictures of objects illuminated by ambient lighting and screen light.

Technical background

In order to have a meeting involving participants not located in the same area, a number of technological systems are available. These systems may include video conferencing, web conferencing and audio conferencing.

The most realistic substitute for real meetings is high-end video conferencing systems. Conventional video conferencing systems comprise a number of endpoints communicating real-time video, audio and/or data streams over WAN, LAN and/or circuit switched networks. The endpoints include one or more monitors, cameras, microphones and/or data capture devices and a codec, which encodes and decodes outgoing and incoming streams, respectively.

Video conference systems are used throughout the business community for point to point audio and visual communication between individuals. The users of video conferencing may sit in workplace environments such as personal office or cubical, small or large meeting rooms or board rooms. Video conference applications installed on multi purpose computers has contributed to widespread the use of personal video conferencing even more.

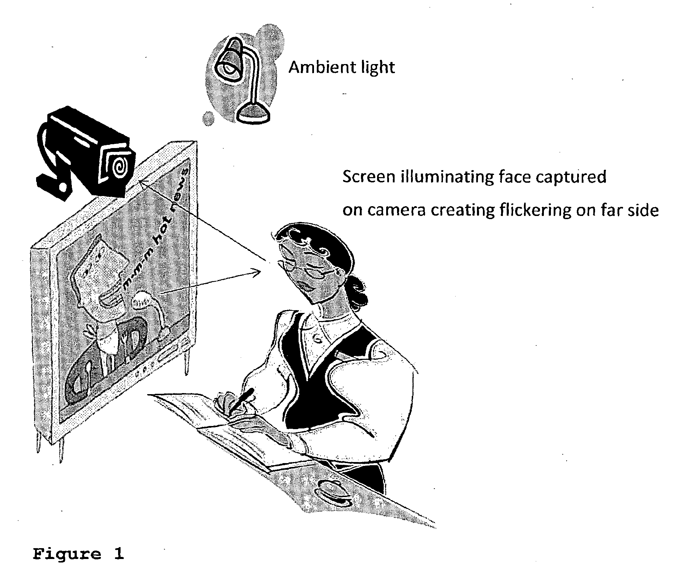

Figure 1 illustrates a customary situation where a person as an object captured by a camera sits close to the display which shows the far side. As screens become bigger and brighter, the screen will illuminate the object which can lead to artefacts such as colour and intensity variations on objects. The artefacts can visually manifest itself in flickering or colour variations that are modulated by whatever is seen on the screen.

The flickering is caused by the camera's exposure time aka integration time to record each individual frame in a video picture combined with the frequencies of the ambient lighting and the refresh rate/frequency of the screen illuminating objects captured by the camera. A screen contains thousands of illuminative pixels in array. Visual content is displayed by successively applying voltage on each pixel in a pixel line from left to right for each line from the top of the screen and downwards. A screen's refresh rate is therefore the frequency of illuminating the pixels in the whole screen from top left to bottom right.

Depending on the refresh rate of the screen in question, it may cause its own flickering even if the camera is optimized for the normal ambient environment. Furthermore, with the advent of larger and high intensity emissive displays, indirect illumination caused by such emitters may cause flickering in all or portions of the image seen by the camera.

It is usually desirable for the integration time to be as long as possible i.e. maximally responding to the frame rate (1/framerate) to maximize signal to noise (S/N) ratio in resulting footage. However, due to line frequency of 50Hz (60Hz in US, 400Hz in airplanes), lamps operating at mains AC exhibit intensity variations at double the line frequency. To avoid flickering (i.e. phantom intensity variations over time, looks like flickering or line rolling), the normal approach is to select an appropriate integration time for the environment with the aim of overcoming the problem during capture. The general relationship that ensures cameras do not beat against a global cyclical stimuli f is:

$$\texttt{Integration time = n/(2f), n= 1, 2, 3, ....}$$

The result of adjusting the integration time according to this equation is that the camera will capture integer numbers of half light wavelengths thereby avoiding variations of light intensity among captured frames.

As already mentioned, it is not only ambient light causing flickering. Especially, in situations as discussed above when captured objects is positioned closed to relatively big screens, the illumination contribution from the screen may be considerable, and if the integration time is adapted to ambient light only, flickering may occur due to the screen's refresh rate.

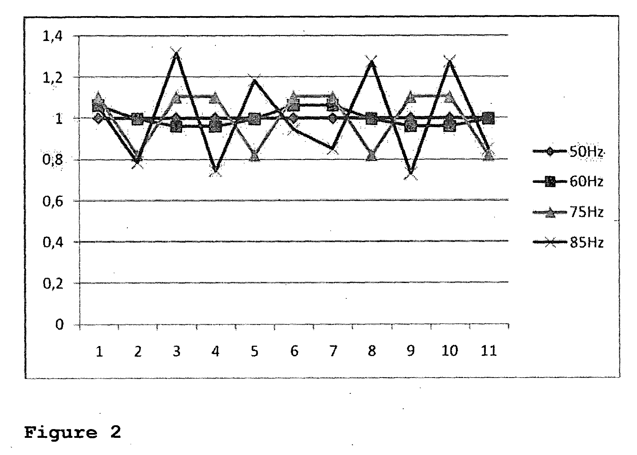

Figure 2 shows the effect of a scene optimized for 50Hz ambient at 10ms integration time, with the intensity variations of various common screen refresh rates/ frequencies when lit 100% by single sinusoidal intensity source. The X-axis is complete 10ms integration windows. As can be seen, the intensity variations increase as the refresh rate moves away from 50 Hz. This is experienced as flickering by people watching the video pictures captured by the camera.

It is therefore a need for a method removing flickering illumination contribution from both ambient lighting and screen light.

US 6 421 097 discloses a method and apparatus for reducing flicker in a video image sequence.

Aspects of the invention are recited in the independent claims and preferred features are set out in the dependent claims.

Brief description of the object of the invention

An aspect of the present disclosure provides method and a correspondingly adjusted video conferencing or video recording unit for removing flickering from video of objects illuminated by a screen operating on a refresh rate ($f_{sc}$) among a first value set including screen compatible refresh rate values and an ambient lighting operating on a certain line frequency ($f_l$) captured by a camera with a certain exposure time ($t_e$) among a second value set including camera compatible exposure time values, by executing the steps of:

I. determining whether a non-zero integer number n exists so that $t_e = n/2f_1$;

I.a. if said non-zero integer number n does not exist, then removing current value of $t_e$ from the second value set, assigning $t_e$ to a value in the second value set fulfilling $t_e = n/2f_1$ and repeating step I;

I.b. if said non-zero integer number n does exist, then determining whether non-zero integer numbers for k and 1 exist so that $kf_{scr} = lf_l$;

I.b.1. if said non-zero integer numbers for k and l exist, then implementing $t_e$ as the camera's exposure time and $f_{sc}$ as the screen's refresh rate;

I.b.2. if said non-zero integer numbers for k and 1 does not exist, then calculating a third value set including values for $f_{scr}$ fulfilling $kf_{scr} = lf_l$ where k and lare non-zero integer numbers, and determining whether one or more values in the third value set are equal to one or more values in the first value set;

I.b.2.1. if not one or more values in said third value set are equal to one or more values in the first value set, then executing step I.a;

I.b.2.2. if one or more values in said third value set are equal to one or more values in the first value set, then assigning $f_{scr}$ to one of the one or more values in the third set being equal to one or more values in the first value set, and

I.a.1.1.1. implementing $t_e$ as the camera's exposure time and $f_{sc}$ as the screen's refresh rate.

Brief description of the drawings

The present invention will be described in detail with reference to a preferred embodiment as shown in the following drawings:

Figure 1 is an illustration of a situation where an object captured by a camera is illuminated both by a screen and ambient lighting.

Figure 2 is a graph illustrating the intensity variations of light captured by a camera caused by various common screen update rates,

Figure 3 is a flow chart illustrating an example of a method according to the present invention.

Detailed description of the invention

In the following, the present invention will be discussed by describing a preferred embodiment, and by referring to the accompanying drawings. However, people skilled in the art will realize other applications and modifications within the scope of the invention as defined in the enclosed independent claims.

According to the present invention, the distractive illuminative flickering due to discrepancy between line frequency, screen updating rate and camera exposure time in video conferencing and video recording is removed by an inventive method of primarily adjusting the screen updating rate and secondary the camera exposure time to achieve a flickering free experience of the video captured by the camera.

It is therefore assumed that both the screen refresh rate and camera exposure time at least to a certain extent are adjustable from data routines through driving devices of the screen and the camera, respectively. This is typically the case in videoconferencing between general purpose computers having a software videoconferencing client installed, and a camera either plugged into a USB-port or integrated in the computer's screen. It could likewise also be the situation for video recording units, when the recorded objects are positioned close to a screen.

Some web cameras have APIs (Application Programming Interface) enabling interaction with other software, much in the same way that a user interface facilitates interaction between humans and computers. This also applies for both external and internal screens. For example, by entering into the Control Panel of Microsoft Windows operating system, one can manually select the refresh rate of the screen or the exposure time of the camera, normally between fixed compatible values. Likewise, through an API associated with the screen or the camera, a software routine can make the same selection by directing certain requests or instructions interpretable for the APIs.

The line frequency of the ambient lighting is predefined, but has a great impact to the selection of screen refresh rate and camera exposure time according to the present invention. However, it can vary between countries, regions, and settings so it should be measured by e.g. the camera before the actual selection occurs. Optical measurement of line frequency from ambient lighting has become a trivial task well known in the art as e.g. described in US Patent 5394217 - "Method and apparatus for determining line frequency and detecting variable frequency light sources", Gaboury et al. Alternatively, it the frequency could also be measured directly from the power line input of the video conferencing device, or simply predefined.

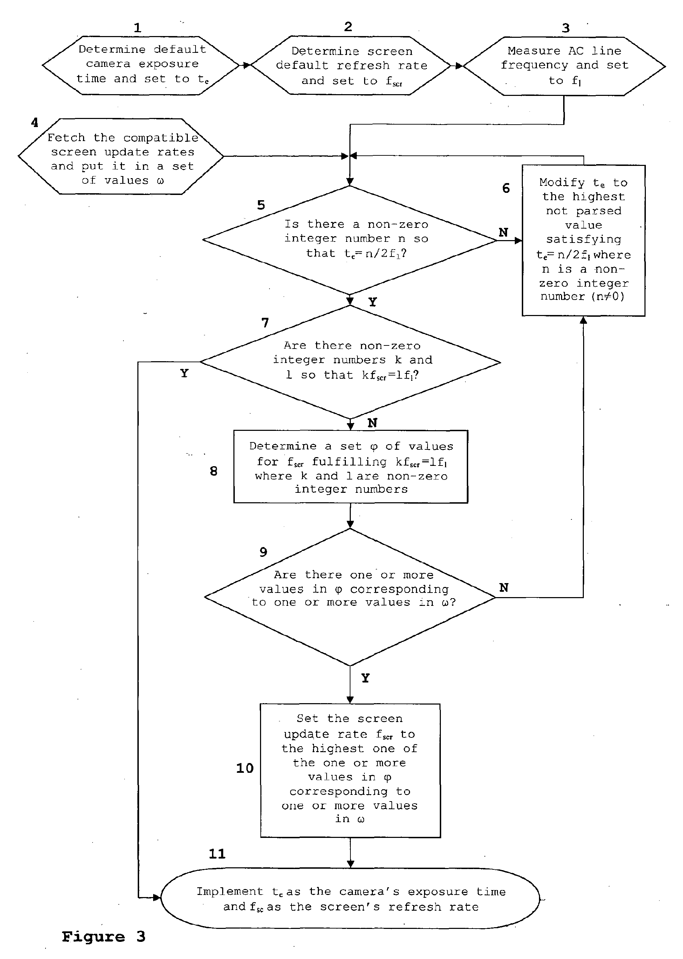

Figure 3 is a flow chart illustrating an example of the process of reaching a flickering free video experience wherein a camera captures objects that are at least partly illuminated by light from a screen where the display are being line wised refreshed with a certain screen refresh rate.

The example starts by some preparation steps. The screen refresh rate is normally set to a default rate, as well as the camera exposure time normally is set to a default time. These default values are in step 1 and 2 captured and allocated to $f_{sc}$ and $t_e$ respectively so that the default values becomes the selected values right away, if they in combination with the line frequency provides flickering free video captured by the camera without any modifications. The line frequency itself is not necessarily known and should be measured e.g. optically by the camera before assigning it to $f_l$. As already indicated, screens are normally compatible with a limited numbers of allowed refresh rates, and these are in a preparation step 4 captured from the driver unit of the screen and put in a set of possible refresh rate values $\omega$.

In the decision step 5, it is determined whether the flickering free equation $t_e = n/2fi$ where n is a non-zero integer number has a solution with the current value for $t_e$. If not, the process proceeds to step 6, where $t_e$ is changed to an alternative value which is not tested in the process before. The selected value for $t_e$ should preferably be as high as possible, but the selection could also be based on other considerations, provided that it picks an potential exposure time that not has been tested earlier in the process.

The process is then looped back to decision step 5.

If in decision step it appears that $t_e = n/2f_l$ has a solution, decision step 7 then determines whether there is one or more solution of the equation $kf_{scr} = lf_l$ where k and 1 are non-zero integer numbers with current $f_{scr}$. This test simply reveals if a least common multiple of $1/f_{scr}$ and $1/f_l$ exists, and if so, it is quite trivial to deduct that the general flickering free equation:

$$\texttt{integration time = n/2f n= 1,2,3,...}$$

has a solution for both $f_{scr}$ and $f_l$, and there will be no flickering contribution either from the screen or the ambient light with the corresponding exposure time (integration time).

If decision step 7 is positive, the process is terminated, and current $f_{sc}$ and $t_e$ are selected to be the screen refresh rate and camera exposure time respectively. If the values are not equal to the default values, they must be modified in the associated driver units, by e.g. sending a request to the associated API for changing to the selected value(s).

If decision step 7 is negative, the process proceeds to step 8 where a set ($\varphi$) of possible values for $f_{sc}$ fulfilling the equation $kf_{scr} = lf_l$ where k and 1 are non-zero integer numbers is determined. The process then proceeds to decision step 9 investigating whether there are one or more values in $\varphi$ corresponding to one or more values of compatible screen refresh rates ($\varphi$) already fetched in preparation step 4. If not, the process turns back to step 6 to select an alternative exposure time ($t_e$). However, if it appears that $\varphi$ and $\varphi$ have common values, the process proceeds to step 10 where the highest common value of the sets $\varphi$ and $\omega$ is allocated as $f_{scr}$. In this example the highest value is selected assuming that a highest possible screen refresh rate is preferred. Alternatively, this selection could also be based on other considerations, but the basic thing is to reach a value being present in both sets of values.

The process is then finally terminated, and current $f_{sc}$ and $t_e$ are selected to be the screen refresh rate and camera exposure time, respectively. They are then modified in the associated driver units, by e.g. sending a request to the associated API for changing to the selected value(s).

**Claims**

1. A method for removing flickering from video recording of objects illuminated by a screen operating on a refresh rate, $f_{sc}$, among a first value set including screen compatible refresh rate values, $f_{scr}$, and an ambient lighting operating on certain line frequency, $f_l$, captured by a camera with a certain exposure time, $t_e$, among a second value set including camera compatible exposure time values, comprising:

   determining (5) whether a non-zero integer number n exists so that $t_e = n/2f_l$;
   if said non-zero integer number n does not exist:

   removing (6) a current value of $t_e$ from the second value set,
   assigning (6) $t_e$ to a value in the second value set fulfilling $t_e = n/2f_l$, and going back to the determining (5) whether a non-zero integer number n exists so that $t_e = n/2f_l$;

   if said non-zero integer number n does exist:

   determining (7) whether non-zero integer numbers for k and l exist so that $kf_{scr} = lf_l$;
   if said non-zero integer numbers for k and l exist: finishing by implementing (11) $t_e$ as the camera's exposure time and $f_{sc}$ as the screen's refresh rate;

   if said non-zero integer numbers for k and l do not exist:

   calculating (8) a third value set including values for $f_{scr}$ fulfilling $kf_{scr} = lf_l$ where k and l are non-zero integer numbers, and
   determining (9) whether one or more values in the third value set are equal to one or more values in the first value set;

   if not one or more values in said third value set are equal to one or more values in the first value set:

   removing (6) a current value of $t_e$ from the second value set, assigning (6) $t_e$ to a value in the second value set fulfilling $t_e = n/2f_l$, and going back to the determining (5) whether a non-zero integer number n exists so that $t_e = n/2f_l$;

   if one or more values in said third value set are equal to one or more values in the first value set:

   assigning (10) $f_{scr}$ to one of the one or more values in the third set being equal to one or more values in the first value set; and
   finishing by implementing (11) $t_e$ as the camera's exposure time and $f_{sc}$ as the screen's refresh rate.

2. The method according to claim 1, comprising, prior to determining whether a non-zero integer number n exists so that $t_e = n/2f_l$:

   optically measuring the line frequency from the camera captured lighting and
   assigning the measured line frequency to $f_l$.

3. The method according to claim 1 or 2, comprising, prior to determining whether a non-zero integer number n exists so that $t_e = n/2f_l$:

   fetching a default screen refresh rate value from a screen driver device and
   assigning the default screen refresh rate value to $f_{sc}$.

4. The method according to claim 1 or 2, comprising, prior to determining whether a non-zero integer number n exists so that $t_e = n/2f_l$:

   fetching a default exposure time value from a camera driver device and
   assigning the default exposure time value to $t_e$.

5. A method according to claim 1 or 2, wherein implementing (11) $t_e$ as the camera's exposure time and $f_{sc}$ as the screen's refresh rate further includes the following steps:

    instructing a camera driver device associated API to set the camera exposure time to $t_e$, and
    instructing a screen driver device associated API to set the camera screen refresh rate to $f_{sc}$.

**6.** The method according to claim 1 or 2, wherein, in removing (6) the current value of $t_e$ from the second value set, assigning (6) $t_e$ to the value in the second value set fulfilling $t_e=n/2f_l$, and repeating the determining (5) whether a non-zero integer number n exists so that $t_e=n/2f_l$:

    the value in the second value set fulfilling $t_e=n/2f_l$ is the highest value in the second value set.

**7.** The method according to any one of claims 1 or 2, comprising, in assigning (10) $f_{scr}$ to one of the one or more values in the third set being equal to one or more values in the first value set:

    assigning $f_{scr}$ to the highest one of the one or more values in the third set being equal to one or more values in the first value set.

**8.** A video conference terminal or a video recording unit with a camera and a screen incorporated therein or connected thereto, the screen being adapted to operate on a refresh rate, $f_{sc}$, among a first value set including screen compatible refresh rate values, $f_{scr}$, the camera being adapted to capture video pictures with a certain exposure time, $t_e$, among a second value set including camera compatible exposure time values of objects illuminated by the screen and an ambient lighting operating on a certain line frequency, $f_l$, the video conference unit or video recording unit being adapted to:

    determine (5) whether a non-zero integer number n exists so that $t_e=n/2f_l$;
    if said non-zero integer number n does not exist:

        remove (6) a current value of $t_e$ from the second value set,
        assign (6) $t_e$ to a value in the second value set fulfilling $t_e=n/2f_l$, and go back to the determining (5) whether a non-zero integer number n exists so that $t_e=n/2f_l$;

    if said non-zero integer number n does exist:

        determine (7) whether non-zero integer numbers for k and l exist so that $kf_{scr}=lf_l$;
        if said non-zero integer numbers for k and l exist: finish by implementing (11)
        $t_e$ as the camera's exposure time and $f_{sc}$ as the screen's refresh rate;

    if said non-zero integer numbers for k and l do not exist:

        calculate (8) a third value set including values for $f_{scr}$ fulfilling $kf_{scr}=lf_l$ where k and l are non-zero integer numbers, and
        determine (9) whether one or more values in the third value set are equal to one or more values in the first value set;

    if not one or more values in said third value set are equal to one or more values in the first value set:

        remove (6) a current value of $t_e$ from the second value set,
        assign (6) $t_e$ to a value in the second value set fulfilling $t_e=n/2f_l$, and go back to the determining (5) whether a non-zero integer number n exists so that $t_e=n/2f_l$;

    if one or more values in said third value set are equal to one or more values in the first value set:

        assign (10) $f_{scr}$ to one of the one or more values in the third set being equal to one or more values in the first value set; and
        finish by implementing (11) $t_e$ as the camera's exposure time and $f_{sc}$ as the screen's refresh rate.

**Patentansprüche**

1. Verfahren zum Entfernen von Flimmereffekten von Videoaufzeichnungen von Objekten, die von einem Bildschirm, der mit einer Auffrischungsrate $f_{sc}$ aus einem ersten Wertesatz arbeitet, der bildschirmkompatible Auffrischungsratenwerte $f_{scr}$ beinhaltet, und einem Umgebungslicht beleuchtet werden, das mit einer bestimmten Zeilenfrequenz $f_l$ arbeitet, erfasst mit einer Kamera mit einer bestimmten Belichtungszeit $t_e$ aus einem zweiten Wertesatz, der kamerakompatible Belichtungszeitwerte beinhaltet, das Folgendes beinhaltet:

   Ermitteln (5), ob eine ganze Zahl n von ungleich null existiert, so dass $t_e=n/2f_l$ ist;
   wenn keine ganze Zahl n von ungleich null existiert:

   Entfernen (6) eines aktuellen Werts von $t_e$ aus dem zweiten Wertesatz,
   Zuordnen (6) von $t_e$ zu einem Wert in dem zweiten Wertesatz, so dass $t_e=n/2f_l$ erfüllt ist, und
   Zurückgehen zum Ermitteln (5), ob eine ganze Zahl n von ungleich null existiert, so dass $t_e=n/2f_l$ ist;

   wenn die genannte ganze Zahl n von ungleich null existiert:

   Ermitteln (7), ob ganze Zahlen von ungleich null für k und l existieren, so dass $kf_{scr}=lf_l$ ist;
   wenn die genannten ganzen Zahlen von ungleich null für k und l existieren:

   Beenden durch Implementieren (11) von $t_e$ als die Belichtungszeit der Kamera und $f_{sc}$ als die Auffrischungsrate des Bildschirms;

   wenn die genannten ganzen Zahlen von ungleich null für k und l nicht existieren:

   Berechnen (8) eines dritten Wertesatzes, der Werte für $f_{scr}$ beinhaltet, die $kf_{scr}=lf_l$ erfüllen, wobei k und l ganze Zahlen von ungleich null sind, und
   Ermitteln (9), ob ein oder mehrere Werte im dritten Wertesatz gleich einem oder mehreren Werten im ersten Wertesatz sind;
   wenn ein oder mehrere Werte in dem genannten dritten Wertesatz nicht auf gleich einen oder mehrere Werte im ersten Wertesatz gesetzt sind:

   Entfernen (6) eines aktuellen Wertes von $t_e$ aus dem zweiten Wertesatz,
   Zuordnen (6) von $t_e$ zu einem Wert im zweiten Wertesatz, so dass $t_e=n/2f_l$ erfüllt ist, und
   Zurückgehen zum Ermitteln (5), ob eine ganze Zahl n von ungleich null existiert, so dass $t_e=n/2f_l$ ist;

   wenn ein oder mehrere Werte in dem genannten dritten Wertesatz gleich einem oder mehreren Werten im ersten Wertesatz ist:

   Zuordnen (10) von $f_{scr}$ zu einem der ein oder mehreren Werte in dem dritten Satz, so dass sie gleich einem oder mehreren Werten im ersten Wertesatz ist/sind; und
   Beenden durch Implementieren (11) von $t_e$ als die Belichtungszeit der Kamera und $f_{sc}$ als die Auffrischungsrate des Bildschirms.

2. Verfahren nach Anspruch 1, das vor dem Ermitteln, ob eine ganze Zahl n von ungleich null existiert, so dass $t_e=n/2f_l$ ist, Folgendes beinhaltet:

   optisches Messen der Zeilenfrequenz der von der Kamera erfassten Beleuchtung und Zuordnen der gemessenen Zeilenfrequenz zu $f_l$.

3. Verfahren nach Anspruch 1 oder 2, das vor dem Ermitteln, ob eine ganze Zahl n von ungleich null existiert, so dass $t_e=n/2f_l$ ist, Folgendes beinhaltet:

   Holen eines Bildschirmauffrischungsraten-Vorgabewertes aus einer Bildschirmtreibervorrichtung und
   Zuordnen des Bildschirmauffrischungsraten-Vorgabewertes zu $f_{sc}$.

4. Verfahren nach Anspruch 1 oder 2, das vor dem Ermitteln, ob eine ganze Zahl n von ungleich null existiert, so dass $t_e=n/2f_l$ ist, Folgendes beinhaltet:

Holen eines Belichtungszeitvorgabewertes von einer Kameratreibervorrichtung und

Zuordnen des Belichtungszeitvorgabewertes zu $t_e$.

**5.** Verfahren nach Anspruch 1 oder 2, wobei das Implementieren (11) von $t_e$ als die Belichtungszeit der Kamera und $f_{sc}$ als die Auffrischungsrate des Bildschirms ferner die folgenden Schritte beinhaltet:

Anweisen einer mit der Kameratreibervorrichtung assoziierten API zum Einstellen der Kamerabelichtungszeit auf $t_e$, und

Anweisen einer mit der Bildschirmtreibervorrichtung assoziierten API zum Einstellen der Kamerabildschirm-Auffrischungsrate auf $f_{sc}$.

**6.** Verfahren nach Anspruch 1 oder 2, wobei beim Entfernen (6) des aktuellen Wertes von $t_e$ aus dem zweiten Wertesatz, dem Zuordnen (6) von $t_e$ zu dem Wert in dem zweiten Wertesatz, so dass $t_e=n/2f_l$ erfüllt wird, und dem Wiederholen der Ermittlung (5), ob eine ganze Zahl n von ungleich null existiert, so dass $t_e=n/2f_l$ ist:

der Wert im zweiten Wertesatz, der $t_e=n/2f_l$ erfüllt, der höchste Wert im zweiten Wertesatz ist.

**7.** Verfahren nach Anspruch 1 oder 2, das beim Zuordnen (10) von $f_{scr}$ zu einem der ein oder mehreren Werte im dritten Satz, so dass er gleich einem oder mehreren Werten im ersten Wertesatz ist, Folgendes beinhaltet:

Zuordnen von $f_{scr}$ zu dem höchsten der ein oder mehreren Werte im dritten Satz, der gleich einem oder mehreren Werten im ersten Wertesatz ist.

**8.** Videokonferenzterminal oder Videoaufzeichnungseinheit mit einer/m darin integrierten oder damit verbundenen Kamera und Bildschirm, wobei der Bildschirm so ausgelegt ist, dass er mit einer Auffrischungsrate $f_{sc}$ unter einem ersten Wertesatz arbeitet, der bildschirmkompatible Auffrischungsratenwerte $f_{scr}$ beinhaltet, wobei die Kamera so ausgelegt ist, dass sie Videobilder mit einer bestimmten Belichtungszeit $t_e$ aus einem zweiten Wertesatz erfasst, der kamerakompatible Belichtungszeitwerte von Objekten beinhaltet, die von dem Bildschirm und einem mit einer bestimmten Zeilenfrequenz $f_l$ arbeitenden Umgebungsbeleuchtung beleuchtet werden, wobei die Videokonferenzeinheit oder die Videoaufzeichnungseinheit ausgelegt ist zum:

Ermitteln (5), ob eine ganze Zahl n von ungleich null existiert, so dass $t_e=n/2f_l$ ist;
wenn keine ganze Zahl n von ungleich null existiert:

Entfernen (6) eines aktuellen Werts von $t_e$ aus dem zweiten Wertesatz,
Zuordnen (6) von $t_e$ zu einem Wert in dem zweiten Wertesatz, der $t_e=n/2f_l$ erfüllt, und

Zurückgehen zum Ermitteln (5), ob eine ganze Zahl n von ungleich null existiert, so dass $t_e=n/2f_l$ ist;
wenn die genannte ganze Zahl n von ungleich null existiert:

Ermitteln (7), ob ganze Zahlen von ungleich null für k und l existieren, so dass $kf_{scr}=lf_l$ ist;
wenn die genannten ganzen Zahlen von ungleich null für k und l existieren:

Beenden durch Implementieren (11) von $t_e$ als die Belichtungszeit der Kamera und $f_{sc}$ als die Auffrischungsrate des Bildschirms;

wenn die genannten ganzen Zahlen von ungleich null für k und l nicht existieren:

Berechnen (8) eines dritten Wertesatzes, der Werte für $f_{scr}$ beinhaltet, die $kf_{scr}=lf_l$ erfüllen, wobei k und l ganze Zahlen von ungleich null sind, und
Ermitteln (9), ob ein oder mehrere Werte in dem dritten Wertesatz gleich einem oder mehreren Werten in dem ersten Wertesatz sind;
wenn nicht ein oder mehrere Werte in dem genannten dritten Wertesatz gleich einem oder mehreren Werten in dem ersten Wertesatz sind:

Entfernen (6) eines aktuellen Wertes von $t_e$ aus dem zweiten Wertesatz,
Zuordnen (6) von $t_e$ zu einem Wert im zweiten Wertesatz, der $t_e=n/2f_l$ erfüllt, und
Zurückgehen zum Ermitteln (5), ob eine ganze Zahl n von ungleich null existiert, so dass $t_e=n/2f_l$ ist;

wenn ein oder mehrere Werte in dem genannten dritten Wertesatz gleich einem oder mehreren Werten im ersten Wertesatz ist/sind:

Zuordnen (10) von $f_{scr}$ zu einem der ein oder mehreren Werte im dritten Satz, die gleich einem oder mehreren Werten im ersten Wertesatz sind; und

Beenden durch Implementieren (11) von $t_e$ als die Belichtungszeit der Kamera und $f_{sc}$ als die Auffrischungsrate des Bildschirms.

## Revendications

1. Procédé de suppression du scintillement d'un enregistrement vidéo d'objets éclairés par un écran fonctionnant à une fréquence de rafraîchissement, $f_{sc}$, parmi un premier ensemble de valeurs comportant des valeurs de fréquence de rafraîchissement compatibles avec l'écran, $f_{scr}$, et un éclairage ambiant fonctionnant à une certaine fréquence de lignes, $f_l$, capturé par une caméra ayant une certaine durée d'exposition, $t_e$, parmi un second ensemble de valeurs comportant des valeurs de durée d'exposition compatibles avec la caméra, comprenant :

la détermination (5) qu'un nombre entier non nul n existe ou non de telle sorte que $t_e = n/2f_l$ ;
si ledit nombre entier non nul n n'existe pas :

la suppression (6) d'une valeur actuelle de $t_e$ du second ensemble de valeurs,
l'attribution (6) de $t_e$ à une valeur dans le second ensemble de valeurs satisfaisant $t_e = n/2f_l$, et
le retour à la détermination (5) qu'un nombre entier non nul n existe ou non de telle sorte que $t_e = n/2f_l$ ;

si ledit nombre entier non nul n existe :

la détermination (7) que des nombres entiers non nuls de k et l existent de telle sorte que $kf_{scr} = lf_l$ ;
si lesdits nombres entiers non nuls de k et l existent :

l'arrêt du procédé en mettant en oeuvre (11) $t_e$ comme durée d'exposition de la caméra et $f_{sc}$ comme fréquence de rafraîchissement de l'écran ;

si lesdits nombres entiers non nuls de k et l n'existent pas :

le calcul (8) d'un troisième ensemble de valeurs comportant des valeurs de $f_{scr}$ satisfaisant $kf_{scr} = lf_l$ où k et l sont des nombres entiers non nuls, et
la détermination (9) qu'une ou plusieurs valeurs dans le troisième ensemble de valeurs sont égales ou non à une ou plusieurs valeurs dans le premier ensemble de valeurs ;
si aucune une ou plusieurs valeurs dans ledit troisième ensemble de valeurs ne sont égales à une ou plusieurs valeurs dans le premier ensemble de valeurs :

la suppression (6) d'une valeur actuelle de $t_e$ du second ensemble de valeurs,
l'attribution (6) de $t_e$ à une valeur dans le second ensemble de valeurs satisfaisant $t_e = n/2f_l$, et
le retour à la détermination qu'un nombre entier non nul n existe ou non de telle sorte que $t_e = n/2f_l$ ;

si une ou plusieurs valeurs dans ledit troisième ensemble de valeurs sont égales à une ou plusieurs valeurs dans le premier ensemble de valeurs :

l'attribution (10) de $f_{scr}$ à l'une des une ou plusieurs valeurs dans le troisième ensemble égales à une ou plusieurs valeurs dans le premier ensemble de valeurs ; et
l'arrêt du procédé en mettant en oeuvre (11) $t_e$ comme durée d'exposition de la caméra et $f_{sc}$ comme fréquence de rafraîchissement de l'écran.

2. Procédé selon la revendication 1, comprenant, avant la détermination qu'un nombre entier non nul n existe ou non de telle sorte que $t_e = n/2f_l$ :

la mesure optique de la fréquence de lignes de l'éclairage capturé par la caméra et
l'attribution de la fréquence de lignes mesurée à $f_l$.

**3.** Procédé selon la revendication 1 ou 2, comprenant, avant la détermination qu'un nombre entier non nul n existe ou non de telle sorte que $t_e=n/2f_l$ :

l'obtention d'une valeur de fréquence de rafraîchissement d'écran par défaut auprès d'un dispositif pilote d'écran et

l'attribution de la valeur de fréquence de rafraîchissement d'écran par défaut à $f_{sc}$.

**4.** Procédé selon la revendication 1 ou 2, comprenant, avant la détermination qu'un nombre entier non nul n existe ou non de telle sorte que $t_e=n/2f_l$ :

l'obtention d'une durée d'exposition par défaut auprès d'un dispositif pilote de caméra et

l'attribution de la valeur de durée d'exposition à $t_e$.

**5.** Procédé selon la revendication 1 ou 2, dans lequel la mise en oeuvre (11) de $t_e$ comme durée d'exposition de la caméra et de $f_{sc}$ comme fréquence de rafraîchissement de l'écran comporte en outre les étapes suivantes :

l'instruction à une API associée au dispositif pilote de caméra de régler la durée d'exposition de caméra à $t_e$, et

l'instruction à une API associée au dispositif pilote d'écran de régler la fréquence de rafraîchissement d'écran à $f_{sc}$.

**6.** Procédé selon la revendication 1 ou 2, dans lequel, à la suppression (6) de la valeur actuelle de $t_e$ du second ensemble de valeurs, l'attribution (6) de $t_e$ à la valeur dans le second ensemble de valeurs satisfaisant $t_e=n/2f_l$, et la répétition de la détermination (5) qu'un nombre entier non nul n existe ou non de telle sorte que $t_e=n/2f_l$ :

la valeur dans le second ensemble de valeurs satisfaisant $t_e=n/ef_l$ est la plus haute valeur dans le second ensemble de valeurs.

**7.** Procédé selon l'une quelconque des revendications 1 ou 2, comprenant, à l'attribution (10) de $f_{acr}$ à l'une des une ou plusieurs valeurs dans le troisième ensemble égales à une ou plusieurs valeurs dans le premier ensemble de valeurs :

l'attribution de $f_{scr}$ à la plus haute valeur des une ou plusieurs valeurs dans le troisième ensemble égales à une ou plusieurs valeurs dans le premier ensemble de valeurs.

**8.** Terminal de visioconférence ou unité d'enregistrement vidéo doté d'une caméra et d'un écran incorporés ou connectés à celui-ci, l'écran étant adapté pour fonctionner à une fréquence de rafraîchissement, $f_{sc}$, parmi un premier ensemble de valeurs comportant des valeurs de fréquence de rafraîchissement compatibles avec l'écran, $f_{scr}$, la caméra étant adaptée pour capturer des images vidéo avec un certaine durée d'exposition $t_e$, parmi un second ensemble de valeurs comportant des valeurs de durée d'exposition compatibles avec la caméra d'objets éclairés par l'écran et un éclairage ambiant fonctionnant à une certaine fréquence de lignes, $f_l$, l'unité de visioconférence ou l'unité d'enregistrement vidéo étant adaptée pour :

déterminer (5) qu'un nombre entier non nul n existe ou non de telle sorte que $t_e=n/2f_l$ ;
si ledit nombre entier non nul n n'existe pas :

supprimer (6) une valeur actuelle de $t_e$ du second ensemble de valeurs,
attribuer (6) $t_e$ à une valeur dans le second ensemble de valeurs satisfaisant $t_e=n/2f_l$, et
revenir à la détermination (5) qu'un nombre entier non nul n existe ou non de telle sorte que $t_e=n/2f_l$ ;

si ledit nombre entier non nul n existe :

déterminer (7) que des nombres entiers non nuls de k et l existent de telle sorte que $kf_{scr}=lf_l$ ;
si lesdits nombres entiers non nuls de k et l existent :

arrêter le procédé en mettant en oeuvre (11) $t_e$ comme durée d'exposition de la caméra et $f_{sc}$ comme fréquence de rafraîchissement de l'écran ;

si lesdits nombres entiers non nuls de k et l n'existent pas :

**10**

calculer (8) un troisième ensemble de valeurs comportant des valeurs de $f_{scr}$ satifaisant $kf_{scr}=lf_l$ où k et l sont des nombres entiers non nuls, et

déterminer (9) qu'une ou plusieurs valeurs dans le troisième ensemble de valeurs sont égales ou non à une ou plusieurs valeurs dans le premier ensemble de valeurs ;

si aucune une ou plusieurs valeurs dans ledit troisième ensemble de valeurs ne sont égales à une ou plusieurs valeurs dans le premier ensemble de valeurs :

> supprimer (6) une valeur actuelle de $t_e$ du second ensemble de valeurs,
> attribuer (6) $t_e$ à une valeur dans le second ensemble de valeurs satisfaisant $t_e=n/2f_l$, et
> revenir à la détermination (5) qu'un nombre entier non nul n existe de telle sorte que $t_e=n/2f_l$ ;

si une ou plusieurs valeurs dans ledit troisième ensemble de valeurs sont égales à une ou plusieurs valeurs dans le premier ensemble de valeurs :

> attribuer (10) $f_{scr}$ à l'une des une ou plusieurs valeurs dans le troisième ensemble égales à une ou plusieurs valeurs dans le premier ensemble de valeurs ; et
> arrêter le procédé en mettant en oeuvre (11) $t_e$ comme durée d'exposition de la caméra et $f_{sc}$ comme fréquence de rafraîchissement de l'écran.

EP 2 517 458 B1

Figure 1

Figure 2

**1** Determine default camera exposure time and set to $t_e$

**2** Determine screen default refresh rate and set to $f_{scr}$

**3** Measure AC line frequency and set to $f_l$

**4** Fetch the compatible screen update rates and put it in a set of values $\omega$

**5** Is there a non-zero integer number n so that $t_e = n/2f_1$?

**6** Modify $t_e$ to the highest not parsed value satisfying $t_e = n/2f_l$ where n is a non-zero integer number $(n \neq 0)$

**7** Are there non-zero integer numbers k and l so that $kf_{scr} = lf_l$?

**8** Determine a set $\varphi$ of values for $f_{scr}$ fulfilling $kf_{scr} = lf_l$ where k and l are non-zero integer numbers

**9** Are there one or more values in $\varphi$ corresponding to one or more values in $\omega$?

**10** Set the screen update rate $f_{scr}$ to the highest one of the one or more values in $\varphi$ corresponding to one or more values in $\omega$

**11** Implement $t_e$ as the camera's exposure time and $f_{sc}$ as the screen's refresh rate

**Figure 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6421097 B

- US 5394217 A